# FASCICULE DE BREVET EUROPEEN

(11) **EP 2 348 930 B1**
(45) Date de publication et mention de la délivrance du brevet: **10.04.2013**
(21) Numéro de dépôt: 09764885.1
(22) Date de dépôt: 11.09.2009
(51) Int. Cl.: A47J 31/36

(54) **DISPOSITIF POUR LA PRÉPARATION D'UNE BOISSON**
GETRÄNKEZUBEREITUNGSVORRICHTUNG
DEVICE FOR PREPARING A DRINK

(30) Priorité: 13.09.2008 WO PCT/IB2008/053717
(43) Date de publication de la demande: 03.08.2011
(73) Titulaire: Ethical Coffee Company SA, 1700 Fribourg (CH)
(72) Inventeur: MARILLER, Alain, 1801 Le Mont-Pèlerin (CH)
(74) Mandataire: Grosfillier, Philippe
(86) Numéro de dépôt international: PCT/IB2009/053983
(87) Numéro de publication internationale: WO 2010/029512

(56) Documents cités:
- EP-A- 1 163 869
- WO-A-2006/013124
- WO-A-2008/096385
- US-B1- 6 182 554

## Description

### Domaine de l'invention

La présente invention se situe dans le domaine des dispositifs pour la préparation de boissons par extraction d'une dose, p.ex. de café moulu, contenue dans une capsule.

### Etat de la technique

Des dispositifs fonctionnant selon le principe précité existent depuis de nombreuses décennies.

Les brevets US 2 899 886, US 2 968 560, US 3 403 617 et US 3 607 297 décrivent des dispositifs où la capsule est initialement perforée en plusieurs endroits, puis traversée par de l'eau sous pression.

La capsule décrite dans le brevet CH 605 293 ou dans le brevet EP 0 242 556 B1 comporte une membrane dans sa partie inférieure. De l'eau sous pression est initialement introduite dans la partie supérieure de la capsule, ce qui entraîne un gonflement de la capsule, principalement au niveau de la membrane. A partir d'une certaine pression, la membrane se déchire, autorisant de la sorte l'écoulement d'un mélange eau-café.

Dans le dispositif présenté dans le brevet EP 0 512 470 B1, en se bombant suite à l'introduction de l'eau dans la capsule, la membrane s'écrase et se perfore contre une surface qui comporte des éléments en relief.

D'autres dispositifs utilisant un mode de fonctionnement identique ou similaire à ceux précédemment décrits sont présentés dans les documents brevets suivants : EP 0 250 810 B1, EP 0 521 188 B1, EP 0 521 397 B1, EP 0 726 053 B1, EP 0 469 162 B1 et WO 92/07775.

On connaît également d'autres dispositifs où le mélange eau-café est d'abord réalisé dans la chambre qui contient la capsule, mais s'écoule seulement à partir du moment où la pression dans la chambre qui contient la capsule a atteint une valeur minimale prédéfinie. Voir notamment les demandes de brevet EP 0 726 053 A1, EP 0 622 039 A1 et EP 1 016 364 A2.

### Exposé général de l'invention

La présente invention constitue une amélioration par rapport aux dispositifs de l'état de la technique. Elle consiste notamment en un mécanisme et une méthode pour percer de manière progressive et efficace la membrane de la capsule.

A cet effet, l'invention concerne en premier lieu un dispositif pour la préparation d'une boisson par extraction d'une dose, p.ex. de café moulu, contenue dans une capsule dotée d'une membrane d'extraction, ledit dispositif comprenant une entrée d'eau, un porte-capsule, une cage à capsule, des moyens de serrage et un ensemble de pointes destinées à percer ladite membrane; caractérisé en ce que les moyens de serrage comprennent un piston monté mobile par rapport à la cage.

Selon un premier mode de réalisation de l'invention les pointes sont montées mobiles relativement au porte-capsule.

Avantageusement, le dispositif comprend un mécanisme pour rendre les pointes mobiles solidaires du piston.

Selon un autre mode de réalisation de l'invention la cage à capsule comporte une pièce d'éjection de capsule.

Dans une autre variante de l'invention, la pièce d'éjection est dépourvue d'éléments de perçage de capsule.

L'utilisation du dispositif selon l'invention comprend les étapes successives suivantes :
- Introduction d'une capsule dans la cage à capsule;
- Abaissement de l'ensemble formé par le porte-capsule, la cage à capsule et le piston de serrage;
- Serrage dudit ensemble et rétraction des pointes mobiles à l'intérieur du porte-capsule;
- Introduction d'eau sous pression dans la capsule, déplacement du piston et entraînement des pointes au travers du porte-capsule et de la membrane.

### Exposé détaillé de l'invention

L'invention est décrite plus en détail ci-après au moyen d'exemples illustrés par les figures suivantes :
La figure 1 décrit un mode de réalisation d'un dispositif selon l'invention lors de l'introduction d'une capsule.
La figure 2 décrit le dispositif de la figure 1 au repos, après fermeture de l'ensemble porte-capsule et cage à capsule.
La figure 3 décrit le dispositif de la figure 1 après serrage de l'ensemble porte-capsule et cage à capsule.
La figure 4 illustre le dispositif de la figure 1 en position active, lorsque de l'eau traverse le dispositif.

### Liste des références numériques utilisées dans les figures

1. Capsule
2. Porte-capsule
3. Cage à capsule
4. Piston de serrage
5. Entrée d'eau
6. Pointes
7. Membrane d'extraction
8. Support de pointes
9. Pointe
10. Espace d'expansion
11. Sortie de boisson
12. Collerette
13. Extrémité inférieure du piston de serrage
14. Extrémité inférieure de la cage à capsule
15. Bloc supérieur
16. Ressort supérieur
17. Pièce d'éjection de capsule
18. Ressort d'éjection
19. Bloc inférieur
20. Ressort inférieur

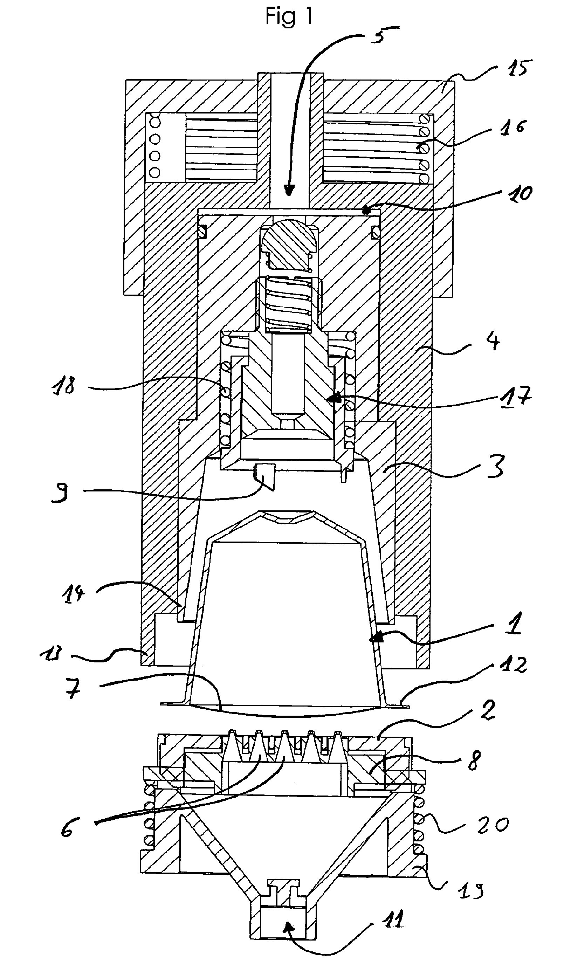

Le dispositif illustré sur les figures 1 à 4 comprend une cage à capsule 3 comportant dans sa partie supérieure une entrée d'eau 5, cette dernière étant reliée à un réservoir d'eau (non-illustré) et à une pompe (non-illustrée). La cage à capsule 3 étant par ailleurs fixée à un bloc supérieur 15 du dispositif.

Le dispositif comprend en outre un piston de serrage 4 monté coulissant par rapport à l'ensemble formé de cage à capsule 3 et du bloc supérieur 15, un ressort supérieur 16 étant disposé dans l'espace formé entre la paroi interne du bloc supérieur 15 et la face supérieure du piston de serrage 4. L'intérieur de la cage 3 comporte un espace destiné à recevoir une capsule 1 comportant une membrane flexible 7 dans sa partie inférieure. La partie inférieure 12 de la cage 3 est adaptée pour contacter la collerette 12 de la capsule 1. Une pièce d'éjection 17 est disposée dans la partie supérieure de la cage 3 et montée coulissante par rapport à cette dernière. La pièce d'éjection 17 comporte dans sa partie inférieure des pointes 9 destinées à percer la face supérieure de la capsule 1. Un espace d'expansion 10 est formé entre la face supérieure externe de la cage 3 et la paroi supérieure interne du piston de serrage 4. La variation de l'espace d'expansion 10 sera discutée plus loin dans le texte.

Un porte-capsule 2 constitué principalement d'une plaque horizontale perforée est disposé dans la partie inférieure du dispositif. Un ensemble de pointes 6, fixées à un support 8 disposé sous le porte-capsule 2, sont montées mobiles relativement au porte-capsule 2, au travers de ses perforations.

Le dispositif fonctionne comme suit :

Une capsule 1 est initialement introduite dans la cage 3 (figure 1).

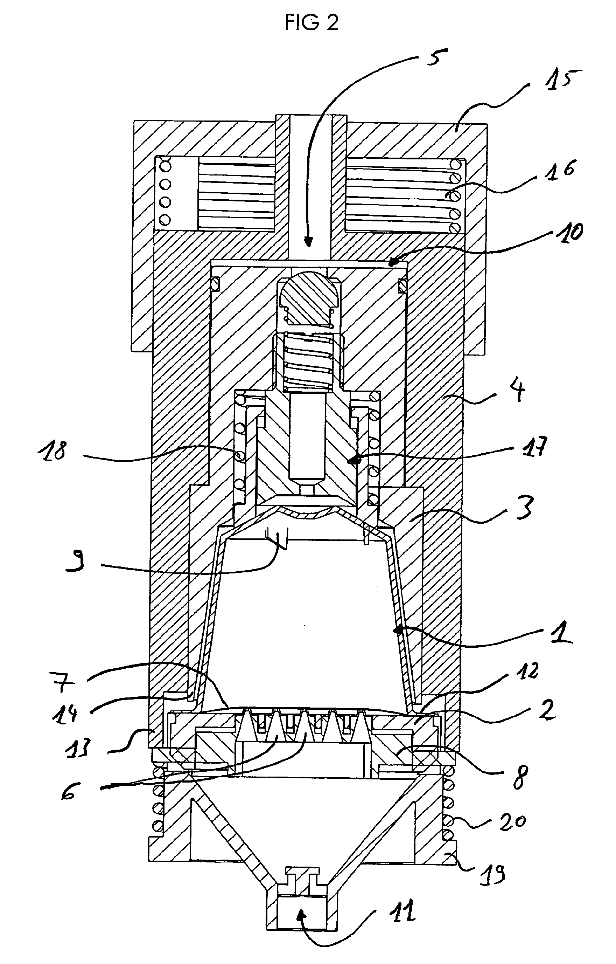

L'ensemble constitué du bloc supérieur 15, du piston de serrage 4 et de la cage 3 est ensuite abaissé et atteint une position intermédiaire (figure 2) qui se caractérise par un contact entre l'extrémité inférieure 13 du piston de serrage 4 et le support de pointes 8. Il convient de relever qu'à ce stade, les pointes 6 émergent légèrement du porte-capsule 2 mais ne percent pas la membrane 7 car cette dernière présente une certaine flexibilité et que par ailleurs, l'eau sous pression n'a pas encore été introduite dans la capsule 1.

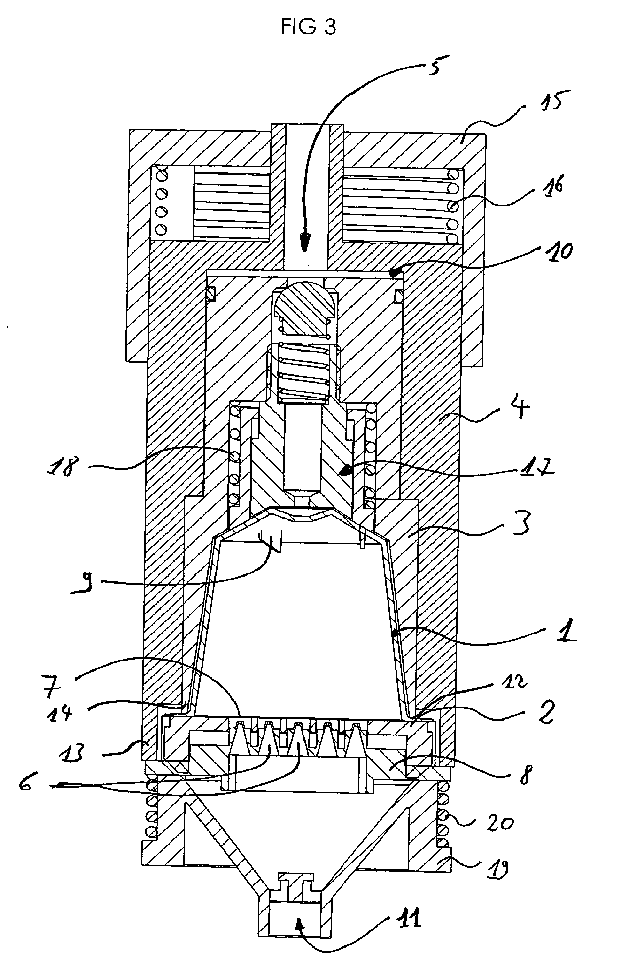

L'ensemble constitué du bloc supérieur 15, du piston de serrage 4 et de la cage 3 continue d'être abaissé jusqu'à ce que le dispositif se trouve dans une position d'amorçage (figure 3). Ce dernier mouvement a pour effet de déplacer le support de pointes 8 et les pointes 6 vers le bas, ce qui entraîne la rétraction des pointes 6 dans le porte-capsule 2. Simultanément, la partie inférieure 12 de la cage 3 vient buter contre la collerette 12 de la capsule 1, assurant ainsi une étanchéité optimale entre la capsule 1 et l'intérieur de la cage 3.

On remarquera par ailleurs qu'en position d'amorçage, la pièce d'éjection 17 s'est rétractée dans un logement disposé dans la partie supérieure de la cage 3, ce qui a eu pour effet de comprimer un ressort d'éjection 18 qui est disposé entre la pièce d'éjection 17 et la paroi interne du logement.

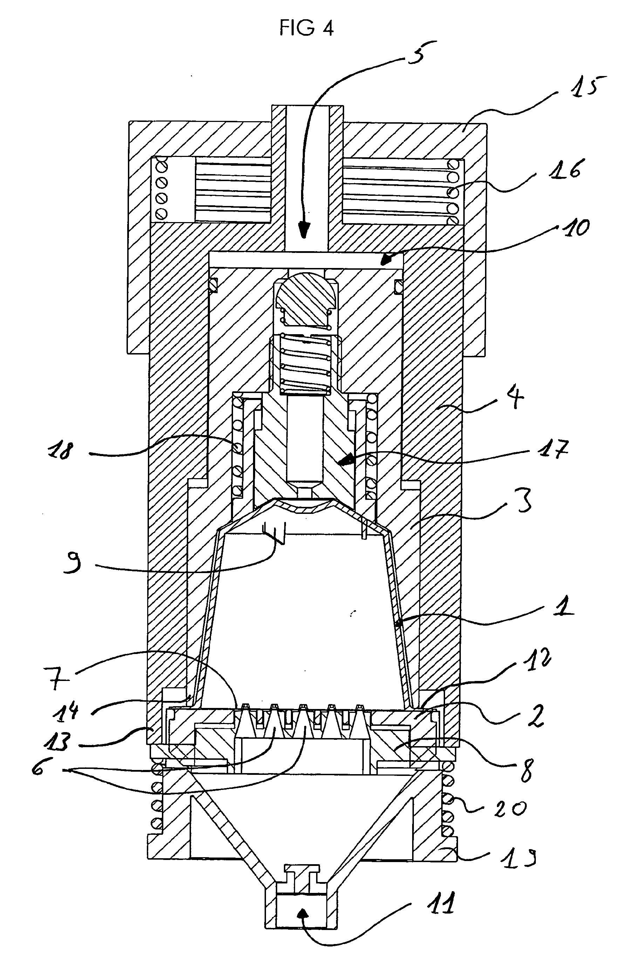

De l'eau sous pression est alors introduite dans le dispositif (figure 4). En remplissant notamment l'espace d'expansion 10, elle a pour effet d'entraîner le piston de serrage 4 vers le haut. Simultanément, l'eau pénètre dans la capsule 1. Il en résulte une augmentation de pression à l'intérieur de celle-ci et la membrane 7 se tend.

Le déplacement du piston de serrage 4 vers le haut entraîne également le support de pointes 8 vers le haut.

L'émergence des pointes 6 à travers le porte-capsule 2 induit le percement de la membrane 7. Le mélange d'eau avec le contenu de la capsule 1 (p.ex. du café) s'écoule donc à travers l'orifice de sortie de boisson 11.

Une fois l'opération d'extraction effectuée, l'ensemble constitué du bloc supérieur 15, du piston de serrage 4 et de la cage 3 est relevé. Le ressort d'éjection 18 se détend, entraînant de la sorte la pièce d'éjection 17 vers le bas. Ce mouvement a pour effet de faciliter l'éjection de la capsule 1 en dehors du dispositif.

Il va sans dire que l'invention ne se limite pas au dispositif illustré sur les figures 1 à 4. Elle couvre également tout mécanisme tel que décrit dans les revendications.

On notera en particulier que la pièce d'éjection 17 peut être dépourvue de pointes.

Plus généralement, le dispositif peut être dépourvu de pointes. Dans ce cas, l'eau est introduite dans la capsule par d'autres moyens, p.ex. via des reliefs auto-perçants.

## Revendications

1. Dispositif pour la préparation d'une boisson par extraction d'une dose, p.ex. de café moulu, contenue dans une capsule (1) dotée d'une membrane d'extraction (7), ledit dispositif comprenant une entrée d'eau (5), un porte-capsule (2), une cage à capsule (3), des moyens de serrage et un ensemble de pointes (6) destinées à percer ladite membrane (3); **caractérisé en ce que** les moyens de serrage comprennent un piston (4) monté mobile par rapport à la cage (3).

2. Dispositif selon la revendication 1 dans lequel les pointes (6) sont montées mobiles relativement au porte-capsule (2).

3. Dispositif selon la revendication 2 comprenant un mécanisme pour rendre les pointes mobiles (6) solidaire du piston (4).

4. Dispositif selon l'une des revendications précédentes dans lequel la cage à capsule (3) comporte une pièce d'éjection de capsule (17).

5. Dispositif selon la revendication 4 dans laquelle la pièce d'éjection (17) est dépourvue d'éléments de perçage de capsule.

6. Utilisation du dispositif tel que défini dans l'une des revendications précédentes comprenant les étapes successives suivantes :
- Introduction d'une capsule (1) dans la cage à capsule (3);
- Abaissement de l'ensemble formé par le porte-capsule (2), la cage à capsule (3) et le piston de serrage (4);
- Serrage dudit ensemble et rétraction des pointes mobiles (6) à l'intérieur du porte-capsule (2);
- Introduction d'eau sous pression dans la capsule (1), déplacement du piston (4) et entraînement des pointes (6) au travers du porte-capsule (2) et de la membrane (7).

## Claims

1. Device for preparing a drink by extracting a serving, for example of ground coffee, contained in a cartridge (1) equipped with an extraction membrane (7), said device including a water inlet (5), a cartridge holder (2), a cartridge cage (3), clamping means and a set of spikes (6) intended to pierce said membrane (3), **characterized in that** the clamping means include a piston (4) mounted in a movable manner with respect to the cage (3).

2. Device according to Claim 1, in which the spikes (6) are mounted in a movable manner in relation to the cartridge holder (2).

3. Device according to Claim 2, including a mechanism for securing the movable spikes (6) to the piston (4).

4. Device according to one of the preceding claims, in which the cartridge cage (3) comprises a cartridge-ejecting component (17).

5. Device according to Claim 4, in which the ejecting component (17) has no cartridge piercing elements.

6. Use of the device as defined in one of the preceding claims, including the following successive steps:
- a cartridge (1) is introduced into the cartridge cage (3);
- the assembly formed by the cartridge holder (2), the cartridge cage (3) and the clamping piston (4) is lowered;
- said assembly is clamped and the movable spikes (6) are retracted into the inside of the cartridge holder (2); and
- pressurized water is introduced into the cartridge (1), the piston (4) is moved and the spikes (6) are driven through the cartridge holder (2) and the membrane (7).

## Patentansprüche

1. Vorrichtung zur Zubereitung eines Getränks durch Extraktion einer Dosis, zum Beispiel gemahlenen Kaffees, die in einer Kapsel (1) enthalten ist, die mit einer Extraktionsmembran (7) versehen ist, wobei die Vorrichtung einen Wassereinlass (5), einen Kapselhalter (2), einen Kapselkäfig (3), Spannmittel und eine Einheit von Spitzen (6), die dazu bestimmt sind, die Membran (7) zu durchbohren, aufweist, **dadurch gekennzeichnet, dass** die Spannmittel einen Kolben (4), der in Bezug zu dem Käfig (3) beweglich installiert ist, aufweisen.

2. Vorrichtung nach Anspruch 1, bei der die Spitzen (6) in Bezug zu dem Kapselhalter (2) beweglich installiert sind.

3. Vorrichtung nach Anspruch 2, die einen Mechanismus aufweist, um die beweglichen Spitzen (6) mit dem Kolben (4) fest zu verbinden.

4. Vorrichtung nach einem der vorhergehenden Ansprüche, bei der der Kapselkäfig (3) einen Kapselauswurfteil (17) aufweist.

5. Vorrichtung nach Anspruch 4, bei der der Auswurfteil (17) keine Kapselbohrelemente aufweist.

6. Einsatz der in einem der vorhergehenden Ansprüche definierten Vorrichtung, die die folgenden aufeinander folgenden Schritte aufweist:
- Einlegen einer Kapsel (1) in den Kapselkäfig (3),
- Senken der Baugruppe, die aus dem Kapselhalter (2), dem Kapselkäfig (3) und dem Spannkolben (4) gebildet ist,
- Spannen der Baugruppe und Zurückziehen der beweglichen Spitzen (6) in das Innere des Kapselhalters (2),
- Einlassen von Wasser unter Druck in die Kapsel (1), Bewegen des Kolbens (4) und Antreiben der Spitzen (6) durch den Kapselhalter (2) und die Membran (7).
